# FASCICULE DE BREVET EUROPEEN

(11) **EP 2 408 340 B1**
(45) Date de publication et mention de la délivrance du brevet: **20.02.2013**
(21) Numéro de dépôt: 10715934.5
(22) Date de dépôt: 15.03.2010
(51) Int. Cl.: A47J 31/44, F24H 1/10

(54) **DISPOSITIF DE DISTRIBUTION D'EAU CHAUDE A LA DEMANDE AVEC BUSE MOBILE**
HEISSWASSERSPENDER MIT HÖHENVERSTELLBAREM AUSLASS
DEVICE FOR DISTRIBUTING HOT WATER ON REQUEST WITH HIGHT-ADJUSTABLE NOZZLE

(30) Priorité: 17.03.2009 FR 0951687
(43) Date de publication de la demande: 25.01.2012
(73) Titulaire: SEB SA, 69130 Ecully (FR)
(72) Inventeur: GUEGAN, Laurent, F-74150 Lornay (FR); TURPIN, Romain, F-14210 Sainte Honorine Du Fay (FR); DURAND, Lionnel, F-14700 Saint Germain Langot (FR); MEYER, Pascal, F-14000 Caen (FR)
(74) Mandataire: Novagraaf Technologies
(86) Numéro de dépôt international: PCT/FR2010/050450
(87) Numéro de publication internationale: WO 2010/106272

(56) Documents cités:
- EP-A- 1 199 016
- EP-A- 1 833 339
- CH-A- 315 281
- DE-C1- 19 921 483
- FR-A- 953 501
- US-A- 5 328 263
- US-A1- 2005 072 853
- US-A1- 2006 283 330

## Description

L'invention concerne un dispositif de distribution d'eau chaude à la demande, également appelé une fontaine à eau chaude.

On connaît un tel dispositif de distribution d'eau chaude du type comportant un bâti formant le corps du dispositif et un circuit d'eau comprenant un dispositif de chauffage d'eau et une buse de distribution d'eau chaude.

Un tel dispositif est utilisé pour fournir de l'eau chaude (au moins 70°C, et en général environ 100°C) dès que l'utilisateur déclenche la mise en fonctionnement du dispositif. Afin d'obtenir cette production quasi-instantanée, l'eau chauffée est uniquement l'eau circulant du réservoir du dispositif à la buse de distribution, lorsqu'elle traverse le dispositif de chauffage d'eau. Ainsi, contrairement à une bouilloire où le temps d'attente est important, l'eau contenue dans le réservoir n'est pas chauffée.

US 2005/0072853 A1 décrit une fontaine à eau chaude comportant une buse fixe et la buse ne délivre pas de vapeur. Par contre, selon ce document, une partie de la vapeur, qui se forme pendant le chauffage de l'eau, est séparée avant la buse.

DE 199 21 483 C1 décrit un dispositif de moussage de lait avec une buse mobile entre une position haute et une position basse. Le dispositif produit uniquement de la vapeur chaude et pas de l'eau chaude.

EP 1 833 339 B1 et EP 1 199 016 A1 décrivent des machines à café munies de buses mobiles. Ces appareils comportent des buses séparées pour délivrer du café, de l'eau chaude, et de la vapeur.

La présente invention vise à réaliser un dispositif de distribution d'eau chaude permettant de distribuer une eau particulièrement chaude.

Selon l'invention, dans le dispositif de distribution d'eau chaude du type précité, la buse est montée mobile par rapport au bâti entre une position haute dans laquelle il permet la mise en place d'un gobelet pour recevoir l'eau chaude, et une position basse de distribution dans laquelle l'extrémité aval de la buse est située dans la moitié inférieure du gobelet.

Du fait qu'en position basse, la buse est dans la moitié inférieure du gobelet fait qu'elle devient rapidement immergée, et, de ce fait, la vapeur sortant en même temps que l'eau chaude est alors captée par l'eau contenue dans le gobelet. De ce fait, la vapeur permet de chauffer l'eau contenue dans le gobelet, et donc de délivrer de l'eau particulièrement chaude.

D'autres particularités et avantages apparaitront dans le mode de réalisation donné à titre d'exemple non limitatif et illustré dans les dessins mis en annexe dans lesquels :
La figure 1 est une vue en perspective de la façade avant du dispositif de distribution d'eau chaude, la buse de distribution étant en position haute,
La figure 2 est une vue de côté du dispositif illustré à la figure 1,
La figure 3 est une vue similaire à la figure 2, la buse étant en position basse, et

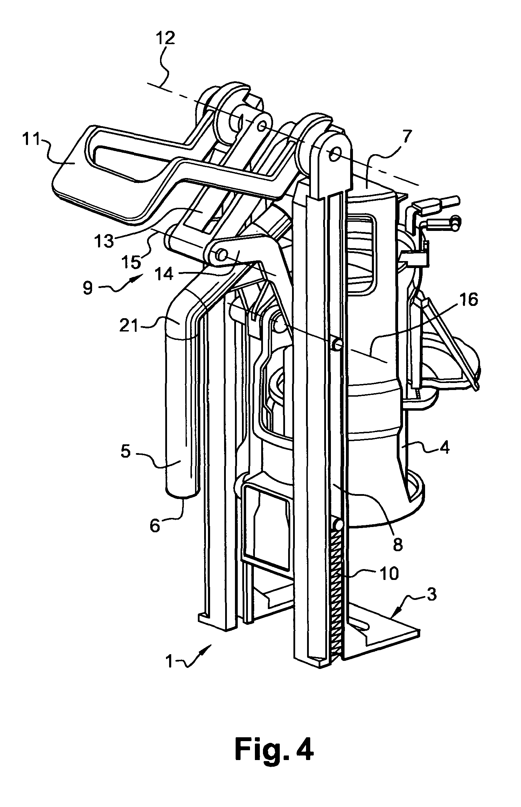

La figure 4 est une vue similaire aux figures 2 et 3, la buse étant en position intermédiaire et la coque du dispositif étant enlevée.

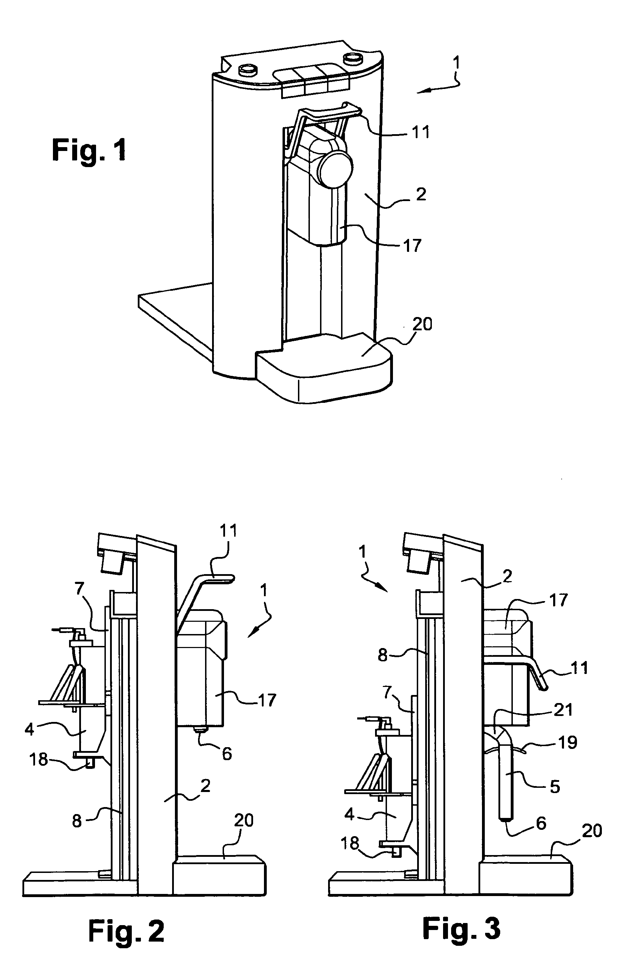

Comme illustré à la figure 1, un dispositif 1 permettant la distribution d'eau chaude à la demande tel qu'une fontaine à eau chaude, comprend une coque 2 délimitant une enceinte à l'intérieur de laquelle se trouve un bâti 3 qui supporte la coque 2, un circuit d'eau qui permet la distribution de l'eau chaude, et un système électrique qui permet le fonctionnement du dispositif 1.

Le circuit d'eau comprend un dispositif de chauffage 4 qui est adapté à chauffer l'eau le traversant, et une buse 5 qui est adaptée à distribuer l'eau chaude à l'utilisateur. Il comprend également une pompe qui est située en amont du dispositif de chauffage 4 et un réservoir d'eau froide qui forme la source d'eau pour le circuit d'eau. Dans le présent exemple, le réservoir d'eau est amovible afin de faciliter son remplissage.

La buse 5 est montée mobile par rapport au bâti 3 entre une position haute dans laquelle la hauteur de la buse 5 permet à l'utilisateur de mettre un gobelet en place, et une position basse dans laquelle l'extrémité aval 6 de la buse 5 est située dans le gobelet afin de prévenir toute éclaboussure pendant la distribution de l'eau chaude. De façon plus précise, en position basse, l'extrémité aval 6 de la buse est située dans la moitié inférieure du gobelet ce qui permet à cette extrémité d'être rapidement immergée et donc à la vapeur en sortant avec l'eau chaude d'être piégée par cette eau et donc de réchauffer celle-ci.

En outre, de préférence, et afin de minimiser les pertes de chaleur, la longueur de la buse 5 est telle qu'en position basse, son extrémité aval 6 se situe au plus près du fond du gobelet. En effet, ceci permet de minimiser la hauteur de chute de l'eau chaude (et donc les pertes caloriques avec l'air ambiant), et d'avoir l'extrémité aval 6 très rapidement immergée (et donc d'avoir au plus tôt un réchauffement de l'eau par la vapeur). Compte tenu de l'épaisseur des parois des gobelets standards, dans le présent mode de réalisation, en position basse, l'extrémité aval 6 de la buse 5 est à environ 3 cm de la surface 20 adaptée à recevoir le gobelet.

Dans le présent exemple, afin de pouvoir recevoir la majorité des gobelets standards, y compris les mugs, la course (verticale) de la buse 5 est supérieure à 8 cm (ici, environ 11 à 12 cm).

Par ailleurs, toujours dans le but d'avoir dans le gobelet une eau la plus chaude possible, la buse 5 porte un couvercle 19 qui est adapté à recouvrir le gobelet quand elle est dans sa position basse. Ainsi, la vapeur d'eau est contenue dans le gobelet. En outre, dans le présent mode de réalisation, le couvercle 19 est monté coulissant le long de la buse 5 afin de permettre son ajustement à la hauteur du gobelet. Il peut également être séparé de la buse 5 en le coulissant jusqu'à l'extrémité aval 6 de cette dernière.

En outre, dans le présent mode de réalisation, le diamètre interne de la buse 5 est au moins de 3 mm afin, d'une part, d'avoir un débit d'eau chaude important, et, d'autre part, de permettre un écoulement naturel de l'eau chaude contenue dans celle-ci une fois la pompe arrêtée (ce qui permet de ne pas envoyer d'eau froide en début de processus de distribution d'eau).

De plus, dans le présent exemple, afin de faciliter son nettoyage, la buse 5 est amovible.

Par ailleurs, dans le présent mode de réalisation, le dispositif de chauffage 4 et la buse 5 sont montés fixes l'un par rapport à l'autre.

De façon plus précise concernant la mobilité de l'ensemble formé par le dispositif de chauffage 4 et la buse 5, cet ensemble est porté par un chariot 7 qui est monté coulissant le long de deux rails 8 verticaux parallèles portés par le bâti 3. Par ailleurs, la buse 5 qui s'étend parallèlement à sa direction de déplacement, est reliée au dispositif de chauffage 4 par une conduite rigide 21 coudée.

Afin de permettre à l'utilisateur de déplacer l'ensemble formé par le dispositif de chauffage 4 et la buse 5, le dispositif de distribution d'eau 1 comprend des moyens de commande 9 qui sont adaptés à permettre le déplacement de cet ensemble de sa position haute à sa position basse. Dans le présent exemple, le dispositif de distribution d'eau 1 comprend des moyens de rappel 10 qui sont adaptés à entraîner l'ensemble précité de sa position haute à sa position basse. Il comprend également des moyens de verrouillage adaptés à agir à l'encontre des moyens de rappel afin de maintenir l'ensemble formé par le dispositif de chauffage 4 et la buse 5 dans sa position basse.

En l'occurrence, les moyens de commande 9 comprennent une poignée 11 qui est montée pivotante sur le bâti 3 selon un axe de rotation 12 perpendiculaire à la direction de déplacement du chariot 7. Les moyens de commande 9 comprennent également des moyens de transmission qui permettent de déplacer l'ensemble formé par le dispositif de chauffage 4 et la buse 5 en fonction du déplacement de la poignée 11. Ici, les moyens de transmission sont formés par deux paires de bielles 13, 14 qui sont montées pivotantes l'une par rapport à l'autre selon un axe de rotation intermédiaire 15 parallèle à l'axe de rotation 12 de la poignée 11. La première paire de bielles 13 est solidaire en rotation avec la poignée 11 et est donc montée pivotante aux deux extrémités longitudinales des bielles qui la composent : d'une part au bâti 3 selon l'axe de rotation 12 de la poignée 11, et d'autre part à la seconde paire de bielles 14 selon l'axe de rotation intermédiaire 15. Quant à la seconde paire de bielles 14, elle est montée pivotante aux deux extrémités longitudinales des bielles qui la composent : d'une part à la première paire de bielles 13 selon l'axe de rotation intermédiaire 15, et d'autre part à l'ensemble formé par le dispositif de chauffage 4 et la buse 5 (plus précisément, au chariot 7) selon un axe de rotation 16 parallèle à l'axe de rotation intermédiaire 15.

Les moyens de rappel 10 sont ici formés par des ressorts de compression 10 qui sont disposés le long de chaque rail 8 et qui relient la base du bâti 3 au chariot 7. Quant aux moyens de verrouillage, ils sont ici formés par un verrou.

La pompe est fixe par rapport au bâti 3. De ce fait, le circuit d'eau comprend une liaison permettant le déplacement du dispositif de chauffage 4 par rapport à la pompe (ici, un tuyau souple non illustré relié à l'extrémité amont 18 du dispositif de chauffage 4).

Enfin, la coque 2 du dispositif de distribution d'eau 1 comprend un élément 17 qui forme un capot de protection derrière lequel la buse 5 est cachée quand elle est en position haute. Ce capot 17 permet à la fois de protéger la buse 5 de tout choc quand le dispositif ne distribue pas d'eau chaude, et de protéger l'utilisateur de toute brûlure quand il manipule la poignée 11.

La présente invention n'est pas limitée au présent mode de réalisation. Il serait ainsi possible d'avoir des moyens de commande, de rappel et de verrouillage différents. En outre, il pourrait ne pas y avoir de moyens de rappel, notamment si le déplacement de l'ensemble formé par le dispositif de chauffage et la buse est motorisé (les moyens de commande comprenant alors, outre le moteur, des boutons de commande manuelle), ou s'il est totalement manuel (la poignée servant tant pour la montée que pour la descente). Les moyens de verrouillage pourraient également être formés par la configuration en liaison à genouillère des moyens de déplacement, par exemple avec les moyens de déplacement du mode de réalisation illustré dans les dessins, par le franchissement par l'axe intermédiaire, de la droite définie par l'axe de la poignée et l'axe du chariot.

De plus, la pompe pourrait être solidaire du dispositif de chauffage et de la buse, surtout si leur déplacement est motorisé.

Les moyens de commande associés aux moyens permettant de déplacer la buse pourraient également permettre d'avoir plus de deux positions stables.

Enfin la buse, au lieu de n'avoir qu'un orifice d'évacuation qui est situé à l'extrémité aval et est orienté axialement, pourrait comprendre un ou plusieurs orifices latéraux à son extrémité aval (ou légèrement décalés vers le haut) afin de réduire les risques d'éclaboussures. De cette façon il serait possible que la buse, en position basse, soit en butée contre le fond du gobelet.

## Revendications

1. Fontaine à eau chaude (1) comportant un bâti (3) et un circuit d'eau relié à un réservoir à eau froide et comprenant :
- un dispositif de chauffage (4) adapté à chauffer l'eau le traversant et,
- une buse (5) permettant la distribution de l'eau chaude,
**caractérisée en ce que** la buse (5) est montée mobile par rapport au bâti (3) entre une position haute dans laquelle est permise la mise en place du gobelet sous la buse, et une position basse de distribution dans laquelle l'extrémité aval (6) de la buse (5) est située dans la moitié inférieure du gobelet, et,
en position basse, l'eau chaude et de la vapeur issues du dispositif de chauffage (4) sortent par la buse en même temps, dans le gobelet.

2. Fontaine à eau chaude selon la revendication 1 , **caractérisé en ce qu'**en position basse, l'extrémité aval (6) de la buse (5) est située à 3 cm au plus de la surface (20) sur laquelle est adapté à reposer le gobelet recevant l'eau chaude.

3. Fontaine à eau chaude selon l'une des revendications 1 ou 3, **caractérisé en ce que** l'amplitude de mouvement vertical de la buse (5) est d'au moins 8 cm.

4. Fontaine à eau chaude selon l'une des revendications 1 à 3, **caractérisé en ce que** la buse (5) porte un couvercle (19) adapté à recouvrir le gobelet quand elle est dans sa position basse.

5. Fontaine à eau chaude selon la revendication 4, **caractérisé en ce que** le couvercle (19) est monté coulissant le long de la buse (5).

6. Fontaine à eau chaude selon l'une des revendications 1 à 5, **caractérisé en ce que** le diamètre interne de la buse (5) est d'au moins de 3 mm.

7. Fontaine à eau chaude selon l'une des revendications 1 à 6, **caractérisé en ce que** la buse (5) est amovible.

8. Fontaine à eau chaude selon l'une des revendications 1 à 7, **caractérisé en ce qu'**il comprend un capot (17) derrière lequel la buse (5) est cachée quand elle est dans sa position haute.

9. Fontaine à eau chaude selon l'une des revendications 1 à 8, **caractérisé en ce que** le dispositif de chauffage (4) et la buse (5) sont montés fixes l'un par rapport à l'autre.

10. Fontaine à eau chaude selon la revendication 9, **caractérisé en ce que** le bâti (3) comprend deux rails (8) verticaux parallèles le long desquels est monté coulissant un chariot (7) supportant le dispositif de chauffage (4) et la buse (5).

11. Fontaine à eau chaude selon l'une des revendications 9 ou 10, **caractérisé en ce qu'**il comprend des moyens de commande (9) adaptés à permettre le déplacement de l'ensemble formé par le dispositif de chauffage (4) et la buse (5) de sa position haute à sa position basse.

12. Fontaine à eau chaude selon la revendication 11, **caractérisé en ce que** les moyens de commande (9) comprennent une poignée (11) montée pivotante sur le bâti (3) et des moyens de transmission (13, 14) permettant de déplacer le dispositif de chauffage (4) et la buse (5) en fonction du déplacement de la poignée (11).

13. Fontaine à eau chaude selon la revendication 12, **caractérisé en ce que** les moyens de transmission (13 ,14) comprennent deux paires de bielles, une première paire (13) solidaire en rotation de la poignée (11) et montée en rotation avec la seconde paire (14) qui est montée en rotation avec l'ensemble formé par le dispositif de chauffage (4) et la buse (5).

14. Fontaine à eau chaude selon l'une des revendications 9 à 13, **caractérisé en ce qu'**il comprend des moyens de rappel (10) entraînant l'ensemble formé par le dispositif de chauffage (4) et la buse (5) dans sa position haute.

15. Fontaine à eau chaude selon la revendication 14, **caractérisé en ce qu'**il comprend des moyens de verrouillage coopérant avec des moyens complémentaires de verrouillage permettant de maintenir le chariot dans sa position basse.

16. Procédé de distribution d'eau chaude (1) dans un gobelet par un dispositif de chauffage (4) chauffant l'eau le traversant et une buse (5) mobile en hauteur, **caractérisé en ce que** par la buse (5), on distribue dans une moitié inférieure du gobelet de l'eau chaude et de la vapeur en même temps, la vapeur chauffant l'eau contenue dans le gobelet.

## Claims

1. Hot water fountain (1) comprising a frame (3) and a water circuit linked to a cold water tank and comprising:
- a heating device (4) suitable for heating the water passing through it and,
- a nozzle (5) for dispensing hot water,
**characterized in that** the nozzle (5) is mounted to move relative to the frame (3) between a high position in which the tumbler can be placed under the nozzle and a low dispensing position in which the downstream end (6) of the nozzle (5) is situated in the bottom half of the tumbler, and,
in the low position, the hot water and steam from the heating device (4) leave through the nozzle at the same time, into the tumbler.

2. Hot water fountain according to Claim 1, **characterized in that**, in the low position, the downstream end (6) of the nozzle (5) is located no more than 3 cm from the surface (20) on which the tumbler receiving the hot water is designed to rest.

3. Hot water fountain according to one of Claims 1 or 2, **characterized in that** the amplitude of the vertical movement of the nozzle (5) is at least 8 cm.

4. Hot water fountain according to one of Claims 1 to 3, **characterized in that** the nozzle (5) bears a cover (19) suitable for covering the tumbler when it is in its low position.

5. Hot water fountain according to Claim 4, **characterized in that** the cover (19) is mounted to slide along the nozzle (5).

6. Hot water fountain according to one of Claims 1 to 5, **characterized in that** the internal diameter of the nozzle (5) is at least 3 mm.

7. Hot water fountain according to one of Claims 1 to 6, **characterized in that** the nozzle (5) is removable.

8. Hot water fountain according to one of Claims 1 to 7, **characterized in that** it comprises a cap (17) behind which the nozzle (5) is covered when it is in its high position.

9. Hot water fountain according to one of Claims 1 to 8, **characterized in that** the heating device (4) and the nozzle (5) are mounted fixed relative to one another.

10. Hot water fountain according to Claim 9, **characterized in that** the frame (3) comprises two parallel vertical rails (8) along which a carriage (7) supporting the heating device (4) and the nozzle (5) is mounted to slide.

11. Hot water fountain according to one of Claims 9 and 10, **characterized in that** it comprises control means (9) suitable for enabling the displacement of the assembly formed by the heating device (4) and the nozzle (5) from its high position to its low position.

12. Hot water fountain according to Claim 11, **characterized in that** the control means (9) comprise a handle (11) mounted to pivot on the frame (3) and transmission means (13, 14) making it possible to displace the heating device (4) and the nozzle (5) according to the displacement of the handle (11).

13. Hot water fountain according to Claim 12, **characterized in that** the transmission means (13, 14) comprise two pairs of link rods, a first pair (13) rotationally attached to the handle (11) and rotationally mounted with the second pair (14) which is rotationally mounted with the assembly formed by the heating device (4) and the nozzle (5).

14. Hot water fountain according to one of Claims 9 to 13, **characterized in that** it comprises return means (10) driving the assembly formed by the heating device (4) and the nozzle (5) into its high position.

15. Hot water fountain according to Claim 14, **characterized in that** it comprises locking means cooperating with complementary locking means making it possible to hold the carriage in its low position.

16. Method for dispensing hot water (1) into a tumbler via a heating device (4) heating the water passing through it and a height-adjustable nozzle (5), **characterized in that**, via the nozzle (5), hot water and steam are dispensed into a bottom half of the tumbler at one and the same time, the steam heating the water contained in the tumbler.

## Patentansprüche

1. Heißwasserspender (1), der ein Gestell (3) und einen mit einem Kaltwasserspeicher verbundenen Wasserkreislauf aufweist und enthält:
- eine Heizvorrichtung (4), die das sie durchquerende Wasser heizen kann, und
- eine Düse (5), die die Ausgabe des heißen Wassers erlaubt,
**dadurch gekennzeichnet, dass** die Düse (5) bezüglich des Gestells (3) zwischen einer oberen Stellung, in der das Einsetzen des Bechers unter die Düse möglich ist, und einer unteren Ausgabestellung beweglich ist, in der das hintere Ende (6) der Düse (5) sich in der unteren Hälfte des Bechers befindet, und
in der unteren Stellung das heiße Wasser und der Dampf, die aus der Heizvorrichtung (4) kommen, gleichzeitig durch die Düse in den Becher austreten.

2. Heißwasserspender nach Anspruch 1, **dadurch gekennzeichnet, dass** in der unteren Stellung das hintere Ende (6) der Düse (5) sich höchstens 3 cm von der Fläche (20) befindet, auf der der das heiße Wasser empfangende Becher stehen kann.

3. Heißwasserspender nach einem der Ansprüche 1 oder 2, **dadurch gekennzeichnet, dass** die Amplitude der senkrechten Bewegung der Düse (5) mindestens 8 cm beträgt.

4. Heißwasserspender nach einem der Ansprüche 1 bis 3, **dadurch gekennzeichnet, dass** die Düse (5) einen Deckel (19) trägt, der geeignet ist, um den Becher zu bedecken, wenn sie in ihrer unteren Stellung ist.

5. Heißwasserspender nach Anspruch 4, **dadurch gekennzeichnet, dass** der Deckel (19) entlang der Düse (5) gleitend montiert wird.

6. Heißwasserspender nach einem der Ansprüche 1 bis 5, **dadurch gekennzeichnet, dass** der Innendurchmesser der Düse (5) mindestens 3 mm beträgt.

7. Heißwasserspender nach einem der Ansprüche 1 bis 6, **dadurch gekennzeichnet, dass** die Düse (5) entfernbar ist.

8. Heißwasserspender nach einem der Ansprüche 1 bis 7, **dadurch gekennzeichnet, dass** er eine Haube (17) enthält, hinter der die Düse (5) versteckt ist, wenn sie in ihrer oberen Stellung ist.

9. Heißwasserspender nach einem der Ansprüche 1 bis 8, **dadurch gekennzeichnet, dass** die Heizvorrichtung (4) und die Düse (5) zueinander ortsfest montiert sind.

10. Heißwasserspender nach Anspruch 9, **dadurch gekennzeichnet, dass** das Gestell (3) zwei parallele senkrechte Schienen (8) enthält, entlang derer ein Schlitten (7) gleitend montiert ist, der die Heizvorrichtung (4) und die Düse (5) trägt.

11. Heißwasserspender nach einem der Ansprüche 9 oder 10, **dadurch gekennzeichnet, dass** er Steuereinrichtungen (9) enthält, die geeignet sind, um die Verschiebung der aus der Heizvorrichtung (4) und der Düse (5) geformten Einheit aus ihrer oberen in ihre untere Stellung zu erlauben.

12. Heißwasserspender nach Anspruch 11, **dadurch gekennzeichnet, dass** die Steuereinrichtungen (9) einen Handgriff (11), der schwenkbar auf das Gestell (3) montiert ist, und Übertragungseinrichtungen (13, 14) enthalten, die es ermöglichen, die Heizvorrichtung (4) und die Düse (5) abhängig von der Verschiebung des Handgriffs (11) zu verschieben.

13. Heißwasserspender nach Anspruch 12, **dadurch gekennzeichnet, dass** die Übertragungseinrichtungen (13, 14) zwei Paare von Schubstangen enthalten, ein erstes Paar (13) drehfest mit dem Handgriff (11) verbunden und drehend mit dem zweiten Paar (14) montiert, das drehbar mit der aus der Heizvorrichtung (4) und der Düse (5) geformten Einheit montiert ist.

14. Heißwasserspender nach einem der Ansprüche 9 bis 13, **dadurch gekennzeichnet, dass** er Rückstelleinrichtungen (10) enthält, die die von der Heizvorrichtung (4) und der Düse (5) geformte Einheit in ihre obere Stellung antreiben.

15. Heißwasserspender nach Anspruch 14, **dadurch gekennzeichnet, dass** er Verriegelungseinrichtungen enthält, die mit komplementären Verriegelungseinrichtungen zusammenwirken, die es ermöglichen, den Schlitten in seiner unteren Stellung zu halten.

16. Verfahren zur Ausgabe von heißem Wasser (1) in einen Becher durch eine Heizvorrichtung (4), die das sie durchquerende Wasser erhitzt, und durch eine höhenverstellbare Düse (5), **dadurch gekennzeichnet, dass** durch die Düse (5) in eine untere Hälfte des Bechers gleichzeitig heißes Wasser und Dampf ausgegeben werden, wobei der Dampf das im Becher enthaltene Wasser erhitzt.
